# EUROPÄISCHE PATENTANMELDUNG

(11) **EP 2 752 365 A2**
(43) Veröffentlichungstag der Anmeldung: **09.07.2014**
(21) Anmeldenummer: 13195429.9
(22) Anmeldetag: 03.12.2013
(51) Int. Cl.: B65B 1/34

(54) **Vorrichtung zum dosierten Befüllen von Behältern mit hackfleischartigem Füllgut**

(30) Priorität: 05.12.2012 AT 505622012
(71) Anmelder: Maschinenfabrik Laska Gesellschaft m.b.H., 4050 Traun (AT)
(72) Erfinder: Laus, Michael, 4020 Linz (AT); Pickl, Oliver, 4060 Leonding (AT); Leibetseder, Günter, 4050 Traun (AT)
(74) Vertreter: Hübscher, Helmut

(57) **Zusammenfassung**

Es wird eine Vorrichtung zum dosierten Befüllen von Behältern (1) mit hackfleischartigem Füllgut beschrieben, wobei ein oberhalb einer Behälteraufnahme mündender Fallschacht (3) vorgesehen ist. Um eine gleichmäßige Füllhöhe für die Behälter sicherzustellen, wird vorgeschlagen, dass der in seinem Querschnitt an den Behälterquerschnitt angepasste Fallschacht (3) unten durch eine zweiflügelige Falltür (4) verschlossen ist und einen in einem der Füllhöhe der Behälter (1) entsprechenden Abstand oberhalb der Falltür (4) angeordneten Trennschieber (8) zum Durchtrennen des den Querschnitt des Fallschachts (3) in einem unteren Abschnitt ausfüllenden Füllgutstrangs (11) aufweist.

## Beschreibung

Die Erfindung bezieht sich auf eine Vorrichtung zum dosierten Befüllen von Behältern mit hackfleischartigem Füllgut, umfassend einen oberhalb einer Behälteraufnahme mündenden Fallschacht.

Hackfleischartiges Gut weist eine Bindung auf, die eine gewisse Formstabilität für die Gutmasse mit sich bringt. Dies bedeutet, dass ein solches in einer abgewogenen Menge von oben in einen kistenförmigen Behälter eingebrachtes Füllgut den Boden des Behälters im Allgemeinen nicht vollständig abdecken und keine über den Behälterboden gleichmäßige Füllhöhe aufweisen wird. Es besteht somit die Gefahr, dass das Füllgut über den oberen Behälterrand vorsteht, was beim Stapeln der befüllten Behälter dazu führt, dass das Füllgut von einem jeweils aufgesetzten Behälter mit der Folge belastet wird, dass das Füllgut durch die Bodenunterseite des aufgesetzten Behälters und der aufgesetzte Behälter auf seiner Unterseite durch das Füllgut verunreinigt wird.

Der Erfindung liegt somit die Aufgabe zugrunde, eine Vorrichtung zum dosierten Befüllen von Behältern mit einem hackfleischartigen Füllgut so auszugestalten, dass die Behälter mit einer über die gesamte Bodenfläche gleichmäßigen Füllhöhe gefüllt werden können.

Ausgehend von einer Vorrichtung der eingangs geschildert Art löst die Erfindung die gestellte Aufgabe dadurch, dass der in seinem Querschnitt an den Behälterquerschnitt angepasste Fallschacht unten durch eine zweiflügelige Falltür verschlossen ist und einen in einem der Füllhöhe der Behälter entsprechenden Abstand oberhalb der Falltür angeordneten Trennschieber zum Durchtrennen des den Querschnitt des Fallschachts in einem unteren Abschnitt ausfüllenden Füllgutstrangs aufweist.

Die Erfindung geht von der Erkenntnis aus, dass eine Dosierung des Füllguts auch über das Füllgutvolumen möglich ist, sodass es gilt, eine an den Behälterquerschnitt angepasste Füllgutschicht mit einer der gewünschten Füllhöhe entsprechenden Dicke vorzuformen, um dann diese vorgeformte Schicht von oben in einen Behälter einzubringen. Zu diesem Zweck ist ein Fallschacht mit einem an die Bodenfläche der zu füllenden Behälter angepassten Querschnitt vorgesehen. In dem nach unten durch eine zweiflügelige Falltür verschlossenen Fallschacht bildet sich somit zumindest in einem Abschnitt oberhalb der Falltür aufgrund der Gewichtsbelastung durch das auflastende Füllgut ein dem Querschnitt des Fallschachts ausfüllender Gutstock aus, der mit Hilfe eines Trennschiebers oberhalb der Falltür durchtrennt werden kann, sodass der abgetrennte Gutstockabschnitt beim Öffnen der Falltür ausreichend formstabil in den unterhalb des Fallschachts positionierten Behälter abfällt und den Behälter in einer über seine Bodenfläche gleichmäßigen Höhe füllt, während der Füllgutstrang im Fallschacht durch den Trennschieber zurückgehalten wird. Nach dem Schließen der Falltür und einem Zurückziehen des Trennschiebers aus dem Fallschacht sinkt der Füllgutstrang im Fallschacht auf die Falltür ab und kann zur Befüllung eines weiteren Behälters wieder durchtrennt werden.

Um die durch das Volumen des abgetrennten Gutstocks bestimmte Dosierung des Füllguts zu ändern, kann der Trennschieber der Höhe nach verlagert werden. Mit der Höhenverstellung des Trennschiebers ändert sich der Abstand des Trennschiebers von der den Fallschacht abschließenden Falltür und damit die Höhe der vom Gutstock abgetrennten Füllgutschicht. Besonders einfache Konstruktionsverhältnisse ergeben sich dabei, wenn der Trennschieber mit einem Teil des Fallschachts der Höhe nach verstellbar ist, weil in diesem Fall der Trennschieber am Fallschacht befestigt werden kann.

Wird das Füllgut nicht kontinuierlich dem Fallschacht zugeführt, so besteht zumindest beim Leeren des Fallschachts die Gefahr, dass das Füllgut nicht mehr den Querschnitt des Fallschachts vollständig ausfüllt. Um hier Abhilfe zu schaffen, kann oberhalb des Fallschachts ein in den Fallschacht einführbarer Pressstempel vorgesehen werden.

Die Falltüren sind ausreichend rasch zu öffnen, um das Abfallen der abgetrennten Gutstockschicht als plattenförmiger Formkörper nicht zu gefährden. Aus diesem Grund empfiehlt es sich, die Türflügel der Falltür über wenigstens einen Schwenkzylinder zu betätigen, der für ein entsprechend beschleunigtes Öffnen der Falltür sorgt.

Damit das Abfallen der abgetrennten Gutstockschicht vom Trennschieber beim Öffnen der Falltür nicht durch einen Unterdruck im Fallschacht behindert wird, kann der Fallschacht unterhalb des Trennschiebers mit wenigstens einer Belüftungsöffnung versehen sein.

Weist der Trennschieber zwei einander bezüglich des Fallschachts gegenüberlie-gende, gegensinnig antreibbare Trennscheiben auf, so kann der Trennvorgang für den Gutstock beschleunigt werden, weil die einander gegenüberliegenden Trennscheiben jeweils nur über den halben Trennweg bewegt werden müssen.

In der Zeichnung ist der Erfindungsgegenstand beispielsweise dargestellt. Es zeigen
Fig. 1 eine erfindungsgemäße Vorrichtung zum dosierten Befüllen von Behältern mit hackfleischartigem Füllgut in einer vereinfachten Seitenansicht,
Fig. 2 diese Vorrichtung in einem Längsschnitt und

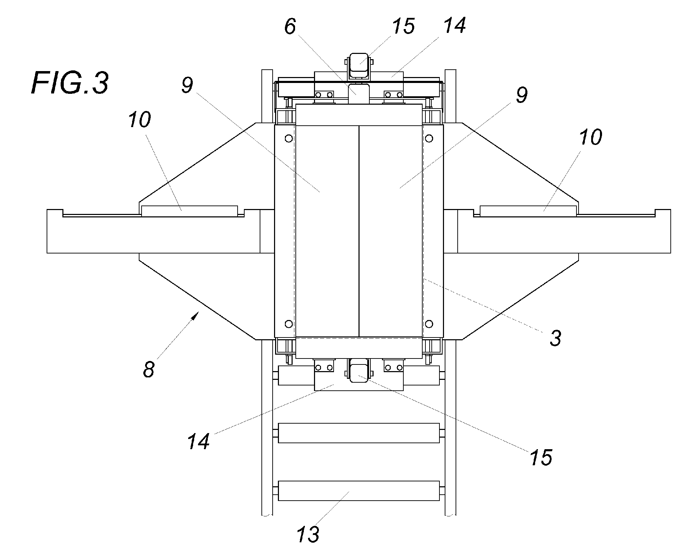

Fig. 3 die Vorrichtung in einer Draufsicht.

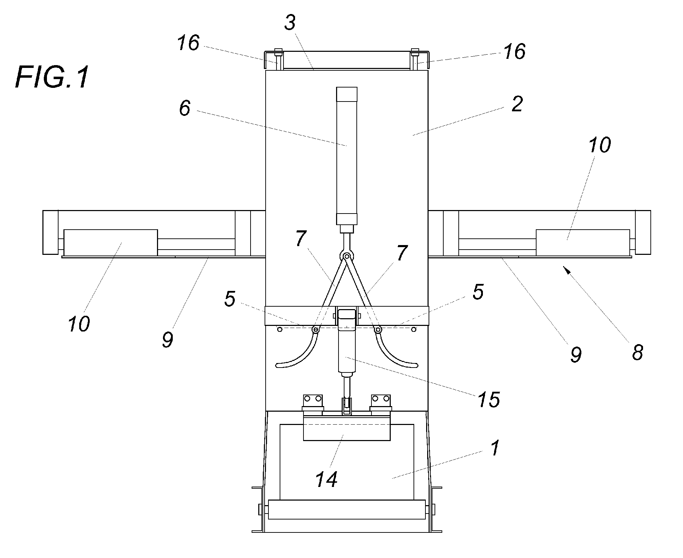

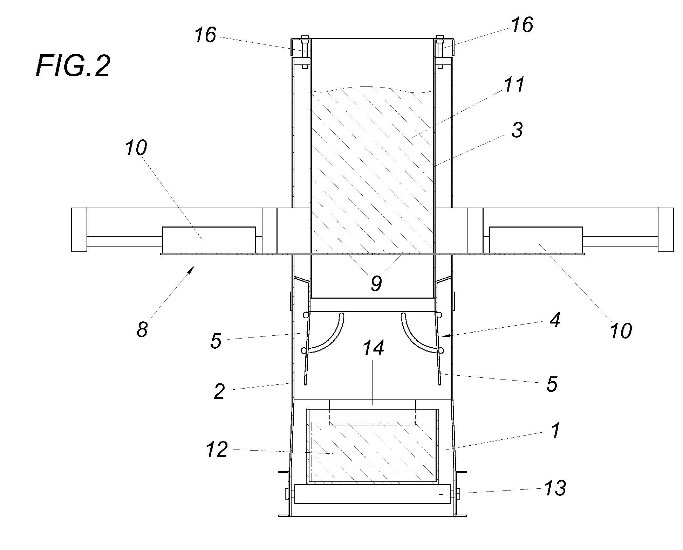

Die dargestellte Vorrichtung zum dosierten Befüllen von kistenförmigen Behältern 1 weist ein Gestell 2 mit einem Fallschacht 3 auf, der an seinem unteren Ende mit einer Falltür 4 verschlossen ist, die zwei Türflügel 5 bildet. Zum Antrieb dieser Türflügel 5 dient ein seitlich am Gestell 2 angeordneter Schwenkzylinder 6, der über Lenker 7 an den Türflügeln 5 angreift. Mit Abstand oberhalb der Falltür 4 ist ein Trennschieber 8 vorgesehen, der sich aus zwei Trennscheiben 9 auf einander gegenüberliegenden Seiten des Fallschachts 3 zusammensetzt. Diese Trennscheiben 9 können über zylindrische Stelltriebe 10 gegensinnig angetrieben werden, um den sich oberhalb der geschlossenen Falltür 4 aufbauenden Gutstock zu durchtrennen und den Füllgutstrang 11 im Fallschacht 3 gemäß der Fig. 2 zurückzuhalten, wenn die abgetrennte Schicht 12 des Gutstocks durch die geöffnete Falltür 4 in einen Behälter 1 abfällt. Zur Förderung der Behälter 1 ist ein als Rollenförderer ausgebildeten Förderers 13 vorgesehen, der das Gestell 2 unterhalb der Falltür 4 des Fallschachts 3 durchsetzt. Um die Behälter 1 in einer vorgegebenen Befüllstellung zu halten, weist das Gestell 2 schwenkbar gelagerte Anschläge 14 auf, die zur Festlegung der Befüllstellung der Behälter 1 mit Hilfe von Stellzylindern 15 in die Anschlagstellung abgeschwenkt werden können, wie dies in der Fig. 1 angedeutet ist.

Der in den Fallschacht 3 eingebrachte Füllgutstrang 11 ruht bei geschlossener Falltür 4 auf den Türflügeln 5 auf und bildet zumindest in einem Abschnitt oberhalb der Falltür 4 einen Gutstock mit einem an die Bodenfläche des Behälters 1 angepassten Querschnitt. Der Gutstock kann somit mit Hilfe des Trennschiebers 8 in einem der Füllhöhe des Behälters 1 entsprechenden Abstand von der Falltür 4 durchtrennt werden, sodass nach dem Öffnen der Falltür 4 die abgetrennte Schicht 12 des Gutstocks als Formkörper mit Spiel in den Behälter 1 abfällt. Mit dem Schließen der Falltür 4 und dem Zurückziehen des Trennschiebers 8 wird der Fallschacht 3 für das Nachsinken des Füllgutstrangs 11 freigegeben, sodass der beschriebene Dosier- und Füllvorgang wiederholt werden kann.

Zur Änderung der Dosierung ist der Abstand zwischen der Falltür 4 und dem Trennschieber 8 entsprechend einzustellen. Zu diesem Zweck ist der den Trennschieber 8 aufweisende Teil des Fallschachts 3 gegenüber der ortsfest im Gestell 2 gelagerten Falltür 4 der Höhe nach verschiebbar gelagert. In der Fig. 2 sind die die Höhenlage des Fallschachts 3 bestimmenden Stellschrauben 16 deutlich erkennbar.

## Patentansprüche

1. Vorrichtung zum dosierten Befüllen von Behältern (1) mit hackfleischartigem Füllgut, umfassend einen oberhalb einer Behälteraufnahme mündenden Fallschacht (3), **dadurch gekennzeichnet, dass** der in seinem Querschnitt an den Behälterquerschnitt angepasste Fallschacht (3) unten durch eine zweiflügelige Falltür (4) verschlossen ist und einen in einem der Füllhöhe der Behälter (1) entsprechenden Abstand oberhalb der Falltür (4) angeordneten Trennschieber (8) zum Durchtrennen des den Querschnitt des Fallschachts (3) in einem unteren Abschnitt ausfüllenden Füllgutstrangs (11) aufweist.

2. Vorrichtung nach Anspruch 1, **dadurch gekennzeichnet, dass** der Trennschieber (8) der Höhe nach verstellbar ist.

3. Vorrichtung nach Anspruch 2, **dadurch gekennzeichnet, dass** der Trennschieber (8) mit einem Teil des Fallschachts (3) der Höhe nach verstellbar ist.

4. Vorrichtung nach einem der Ansprüche 1 bis 3, **dadurch gekennzeichnet, dass** oberhalb des Fallschachts (3) ein in den Fallschacht (3) einführbarer Pressstempel vorgesehen ist.

5. Vorrichtung nach einem der Ansprüche 1 bis 4, **dadurch gekennzeichnet, dass** die Flügel (5) der Falltür (4) mit Hilfe von Schwenkzylindern (6) betätigbar sind.

6. Vorrichtung nach einem der Ansprüche 1 bis 5, **dadurch gekennzeichnet, dass** der Fallschacht (3) unterhalb des Trennschiebers (8) wenigstens eine Belüftungsöffnung aufweist.

7. Vorrichtung nach einem der Ansprüche 1 bis 6, **dadurch gekennzeichnet, dass** der Trennschieber (8) zwei einander bezüglich des Fallschachts (3) gegenüberliegende, gegensinnig antreibbare Trennscheiben (9) aufweist.
